# EUROPÄISCHE PATENTSCHRIFT

(11) **EP 2 900 717 B1**
(45) Veröffentlichungstag und Bekanntmachung des Hinweises auf die Patenterteilung: **12.08.2020**
(21) Anmeldenummer: 13770648.7
(22) Anmeldetag: 20.09.2013
(51) Int. Cl.: C08G 18/24, C08G 18/28, C08G 18/79, B01J 31/02

(54) **POLYISOCYANAT-POLYADDITIONSPRODUKTE**
POLYISOCYANATE POLYADDITION PRODUCTS
PRODUITS DE POLYADDITION DE POLYISOCYANATE

(30) Priorität: 25.09.2012 EP 12185930
(43) Veröffentlichungstag der Anmeldung: 05.08.2015
(73) Patentinhaber: Covestro Deutschland AG, 51373 Leverkusen (DE)
(72) Erfinder: RICHTER, Frank, 51373 Leverkusen (DE); GRAHL, Michael, 51371 Leverkusen (DE); FLECK, Olaf, 51467 Bergisch Gladbach (DE)
(74) Vertreter: Levpat
(86) Internationale Anmeldenummer: PCT/EP2013/069615
(87) Internationale Veröffentlichungsnummer: WO 2014/048854

(56) Entgegenhaltungen:
- WO-A1-2009/132784
- WO-A1-2011/051247

## Beschreibung

Die Erfindung betrifft ein Verfahren zur Herstellung von Polyisocyanat-Polyadditionsprodukten unter Einsatz spezieller Katalysatoren. Diese Polyisocyanat-Polyadditionsprodukte werden insbesondere im Beschichtungsbereich eingesetzt.

Polyurethanbeschichtungen sind seit langem bekannt und werden in vielen Bereichen eingesetzt. Sie werden in der Regel aus einer Polyisocyanat- und einer Hydroxylkomponente durch Vermischen unmittelbar vor der Applikation hergestellt (2K-Technologie). Für lichtechte Beschichtungen werden in der Regel Polyisocyanatkomponenten auf Basis aliphatischer Polyisocyanate eingesetzt, die im Vergleich zu Produkten mit aromatisch gebundenen Isocyanatgruppen deutlich langsamer mit der Hydroxylkomponente in Reaktion treten. In den meisten Fällen muss daher die Reaktion katalysiert werden, insbesondere dann, wenn man keine allzu hohen Reaktionstemperaturen anwenden kann oder will, auch wenn möglichst zur weiteren Beschleunigung der Reaktion erwärmt wird. Als Katalysatoren haben sich dabei organische Zinnverbindungen, insbes. Dibutylzinndilaurat (DBTL) bewährt. Organozinnverbindungen haben per Definition mindestens eine Sn-C-Bindung im Molekül. Sie weisen den generellen Nachteil eines ungünstigen ökologischen Profils auf, was u. a. bereits dazu geführt hat, die Stoffklasse der Organozinnverbindungen aus Schiffsanstrichstoffen, denen sie als Biozid beigemengt wurden, vollständig zu verbannen.

Organozinn-freie Katalysatoren für die Polyurethanherstellung waren und sind daher im Fokus von Neuentwicklungen. Häufig weicht man dabei auf Elemente aus, deren toxikologisches Profil per se als weniger kritisch verglichen mit Organozinnverbindungen eingeschätzt wird, z.B. Wismut, Titan oder Zink. Ein Nachteil all dieser Katalysatoren ist allerdings, dass sie nicht so universell einsetzbar sind wie Organozinnverbindungen. So weisen viele der als Alternative diskutierten Katalysatoren in einer Reihe von Anwendungsgebieten Nachteile bis hin zum völligen Verlust der katalytischen Aktivität auf. Beispiele hierfür sind die rasche Hydrolyse von Wismutverbindungen im wässrigen Milieu, was sie für das aktuell und in Zukunft immer wichtiger werdende Gebiet der wasserbasierten Beschichtungstechnologien uninteressant macht, und die zuweilen unbefriedigenden Farbeffekte von Titanverbindungen in bestimmten Lackformulierungen.

Die WO 2011/051247 beschreibt den Einsatz spezieller anorganischer Sn(IV)-Katalysatoren für die Beschleunigung der NCO-OH-Reaktion, allerdings mit der zusätzlichen Eigenschaft, diese Reaktion erst bei erhöhter Temperatur zu beschleunigen und bei Zimmertemperatur möglichst wirkungslos zu sein (Themolatenz).
Ganz allgemein gibt es aber auch Anwendungsgebiete in der Polyurethanchemie, bei denen die Anwendung höherer Temperaturen nicht in Frage kommt, z.B. der Baubereich. Hier ist man eher an einer zügigen Vernetzung mitunter sogar bei deutlich niedrigeren Temperaturen als 20-25 °C ("Zimmertemperatur") interessiert.

Aus der WO 2009/132784 sind Katalysatoren und deren Einsatz bei der Herstellung von Polyurethanen bekannt geworden. Auf die Herstellung dieser Katalysatoren und insbesondere die gezielte Beeinflussung ihrer Reaktivität durch den Zusatz von Protonensäuren wird in dieser Publikation nur in allgemeiner Weise und anhand von Literaturzitaten eingegangen.

Es bestand daher die Aufgabe, die Vorteile der in WO 2011/051247 genannten, thermolatenten Katalysatoren auch unter gezielter Umgehung der Thermolatenz zur Geltung zu bringen, d.h. gegenüber den altbekannten, konventionellen Systemen auf Organozinnbasis bei der jeweiligen Reaktionstemperatur auf vergleichbarem Niveau zu halten ohne dabei die Katalysatorkonzentration (bezogen auf die gleiche Polyurethanmatrix und "aktives" Zentralatom, Sn) nennenswert gegenüber den altbekannten Organozinnkatalysatoren des Standes der Technik anheben zu müssen.

Diese Aufgabe konnte überraschenderweise durch den Zusatz von Protonensäuren zum Reaktionsgemisch gelöst werden.

Gegenstand der Erfindung ist daher ein Verfahren zur Herstellung von Polyisocyanat-Polyadditionsprodukten wobei
a) mindestens ein aliphatisches, cycloaliphatisches, araliphatisches und/oder aromatisches Polyisocyanat
b) mindestens eine NCO-reaktive Verbindung
c) mindestens ein, ohne Zusatz von Protonensäuren ggf. thermolatenter, anorganischer, Zinn enthaltender Katalysator
d) gegebenenfalls weitere von c) verschiedene Katalysatoren und/oder Aktivatoren
e) gegebenenfalls Füllstoffe, Pigmente, Additive, Verdicker, Entschäumer und/oder andere Hilfs- und Zusatzstoffe und
f) eine, bezogen auf den unter c) genannten Katalysator mindestens äquimolare Menge und bezogen auf die NCO-reaktiven Gruppen aus der Verbindung aus b) maximal dreifach-molaren Menge einer Protonensäure
miteinander zur Reaktion gebracht werden,wobei das Verhältnis des Gewichts des Zinns aus Komponente c) und des Gewichts der Komponente a) weniger als 1000 ppm beträgt, wenn Komponente a) ein aliphatisches Polyisocyanat ist und weniger als 80 ppm beträgt, wenn Komponente a) ein aromatisches Polyisocyanat ist,
dadurch gekennzeichnet, dass als thermolatente Katalysatoren c) zyklische Zinnverbindungen der Formel I, II oder III eingesetzt werden: 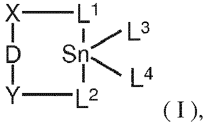 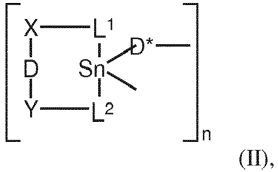 mit n > 1, 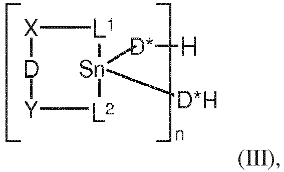 mit n > 1,
wobei gilt, dass
D für -O-, -S- oder -N(R¹)- steht
   wobei R¹ für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 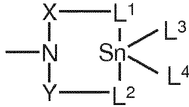 steht,
   oder R¹ und L³ zusammen für -Z-L⁵- stehen, und
D* für -O- oder -S- steht, sowie
X, Y und Z für gleiche oder unterschiedliche Reste ausgewählt aus Alkylenresten der Formeln -C(R²)(R³)-, -C(R²)(R³)-C(R⁴)(R⁵)- oder -C(R²)(R³)-C(R⁴)(R⁵)-C(R⁶)(R⁷)- oder ortho-Arylenresten der Formeln 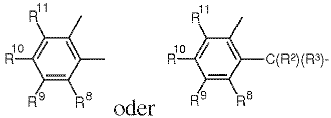 stehen,
   wobei R² bis R¹¹ unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen, und
L¹, L² und L⁵ unabhängig voneinander für -O-, -S-, -OC(=O)-, -OC(=S)-, -SC(=O)-, - SC(=S)-, -OS(=O)₂O-, -OS(=O)₂- oder -N(R¹²)- stehen,
   wobei R¹² für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen, der gegebenenfalls Heteroatome aus der Reihe Sauerstoff, Schwefel, Stickstoff enthalten kann, oder für Wasserstoff steht, und
L³ und L⁴ unabhängig voneinander für -OH, -SH, -OR¹³, -Hal, - OC(=O)R¹⁴, -SR¹⁵, -OC(=S)R¹⁶, -OS(=O)₂OR¹⁷, -OS(=O)₂R¹⁸ oder -NR¹⁹R²⁰ stehen, oder L³ und L⁴ zusammen stehen für -L¹-X-D-Y-L²- stehen
   wobei für R¹³ bis R²⁰ unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen, die gegebenenfalls Heteroatome aus der Reihe Sauerstoff, Schwefel, Stickstoff enthalten können, oder für Wasserstoff stehen.

Bevorzugt handelt es sich bei D um -N(R¹)- und bevorzugt stehen L³ und L⁴ unabhängig voneinander für -OR¹³, -Hal, -OC(=O)R¹⁴, oder L³ und L⁴ stehen zusammen für -L¹-X-D-Y-L²-.

Bevorzugt handelt es sich bei R¹ um Wasserstoff oder einen Alkyl-, Aralkyl-, Alkaryl- oder Arylrest mit bis zu 20 C-Atomen oder um den Rest 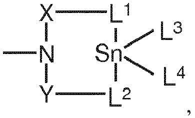 besonders bevorzugt um Wasserstoff oder einen Alkyl-, Aralkyl-, Alkaryl- oder Arylrest mit bis zu 12 C-Atomen oder um den Rest 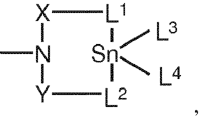 ganz besonders bevorzugt um Wasserstoff oder einen Methyl-, Ethyl-, Propyl-, Butyl-, Hexyl- oder Octyl-Rest, wobei Propyl-, Butyl-, Hexyl-, und Octyl für alle isomeren Propyl-,

Butyl-, Hexyl- sowie Octylreste stehen, um Ph-, CH₃Ph- oder um den Rest

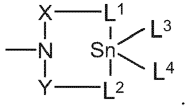

Bevorzugt handelt es sich bei D* um -O-.

Bevorzugt handelt es sich bei X, Y und Z um die Alkylenreste -C(R²)(R³)-, -C(R2)(R³)-C(R⁴)(R⁵)-oder den ortho-Arylenrest

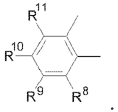

Bevorzugt handelt es sich bei R² bis R⁷ um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R⁸ bis R¹¹ um Wasserstoff oder Alkylreste mit bis zu 8 C-Atomen, besonders bevorzugt um Wasserstoff oder Methyl.

Bevorzugt handelt es sich bei L¹, L² und L⁵ um -NR¹²-, -S-, -SC(=S)-, -SC(=O)-, -OC(=S)-, -O-, oder -OC(=O)-, besonders bevorzugt um -O-, oder -OC(=O)-.

Bevorzugt handelt es sich bei R¹² um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L³ und L⁴ um -Hal, -OH, -SH, -OR¹³, -OC(=O)R¹⁴, wobei die Reste R¹³ und R¹⁴ bis zu 20 Kohlenstoffatome, bevorzugt bis zu 12 Kohlenstoffatome aufweisen. Besonders bevorzugt handelt es sich bei L³ und L⁴ um Cl-, MeO-, EtO-, PrO---, BuO---, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

Bevorzugt handelt es bei R¹⁵ bis R²⁰ um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten L'-X, L²-Y und L⁵-Z stehen bevorzugt für -CH₂CH₂O-, -CH₂CH(Me)O-, -CH(Me)CH₂O-, -CH₂C(Me)₂O-, -C(Me)₂ CH₂O- oder -CH₂C(=O)O-.

Die Einheit L¹-X-D-Y-L² steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-][CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CH₂C(Me)₂O-]_{2;} HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-][CH(Me)CH₂O-], PhN[CH₂C(Me)₂O-]_{2;} PhN[CH₂C(Me)₂O-][C(Me)₂CH₂O-], PhN[CH₂C(=O)O-]₂,

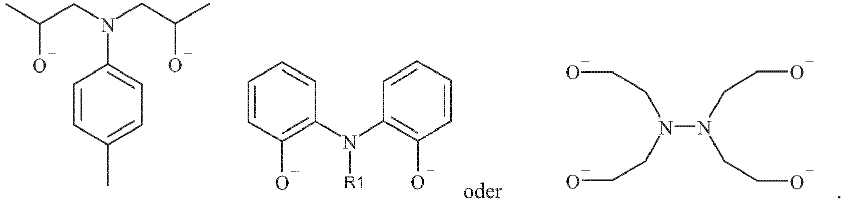

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome (,Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B. 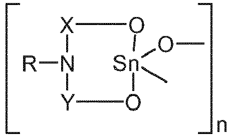 mit n > 1 (vgl. Formel II). Bei niedrigen Oligomerisierungsgraden findet man häufig cyclische, bei höheren Oligomerisierungsgraden lineare Oligomere mit OH- bzw. SH-Endgruppen (vgl. Formel III).

Ein weiterer Gegenstand der Erfindung ist ein Verfahren zur Herstellung von Polyisocyanat-Polyadditionsprodukten wobei
a) mindestens ein aliphatisches, cycloaliphatisches, araliphatisches und/oder aromatisches Polyisocyanat mit
b) mindestens einer NCO-reaktiven Verbindung in Gegenwart
c) mindestens eines, ohne die Gegenwart von Protonensäuren ggf. thermolatenten, anorganischen, Zinn enthaltenden Katalysators
d) gegebenenfalls weiterer von c) verschiedener Katalysatoren und/oder Aktivatoren und
e) gegebenenfalls Füllstoffen, Pigmenten, Additiven, Verdickern, Entschäumern und/oder anderen Hilfs- und Zusatzstoffen und
f) einer, bezogen auf den unter c) genannten Katalysator mindestens äquimolaren Menge und bezogen auf die NCO-reaktiven Gruppen aus der Verbindung aus b) maximal dreifach-molaren Menge einer Protonensäure
umgesetzt wird, wobei das Verhältnis des Gewichts des Zinns aus Komponente c) und des Gewichts der Komponente a) weniger als 1000 ppm beträgt, wenn Komponente a) ein aliphatisches Polyisocyanat ist und weniger als 80 ppm beträgt, wenn Komponente a) ein aromatisches Polyisocyanat ist, dadurch gekennzeichnet, dass als thermolatente Katalysatoren c) zyklische Zinnverbindungen der Formel I, II oder III eingesetzt werden: 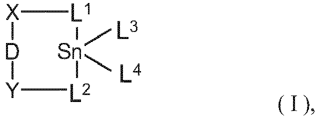 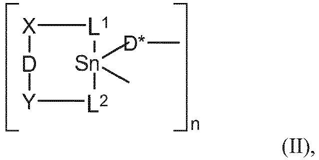 mit n > 1, 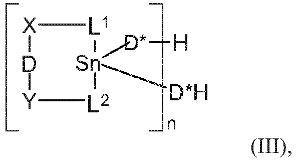 mit n > 1,
wobei für D, D*, Y, X und L¹ bis L⁴ die oben angegebenen Definitionen gelten.

In den Fällen, in denen die Zinnverbindungen Liganden mit freien OH- und/oder NH-Resten aufweisen, kann der Katalysator bei der Polyisocyanat-Polyadditionsreaktion in das Produkt eingebaut werden. Besonderer Vorteil dieser einbaubaren Katalysatoren ist ihr stark reduziertes Fogging-Verhalten, was besonders beim Einsatz von Polyurethanbeschichtungen im Automobilinnenraum wichtig ist.

Die verschiedenen Herstellungsmethoden für die erfindungsgemäß zu verwendenden Zinn(IV)-Verbindungen bzw. ihrer Zinn(II)-Precursoren sind u.a. beschrieben in: WO 2011/113926, J. Organomet. Chem. 2009 694 3184-3189, Chem. Heterocycl. Comp. 2007 43 813-834, Indian J. Chem. 1967 5 643-645 sowie in darin angeführter Literatur.

Eine Reihe zyklischer Zinnverbindungen wurde bereits auch für die Verwendung als Katalysator für das Isocyanat-Polyadditionsverfahren vorgeschlagen, vgl. DD-A 242 617, US-A 3 164 557, DE-A 1 111 377, US-A 4 430 456, GB-A 899 948, US-A 2008/0277137. Allen diesen vorbeschriebenen Systemen des Standes der Technik ist allerdings gemein, dass es sich ausnahmslos um Sn-II- oder Organo-zinn-IV-verbindungen handelt.

Die Katalysatoren können mit weiteren aus dem Stand der Technik bekannten Katalysatoren/Aktivatoren kombiniert werden; zum Beispiel Titan-, Zirkonium-, Bismut-, Zinn(II)-und/oder eisenhaltigen Katalysatoren, wie sie beispielsweise in WO 2005/058996 beschrieben sind. Möglich ist auch eine Zugabe von Aminen oder Amidinen.

Der erfindungsgemäß eingesetzte Katalysator kann, ggf. in einem geeigneten Lösungsmittel vorgelöst, gemeinsam mit der NCO-reaktiven Verbindung (Polyol) oder dem Polyisocyanat der Reaktionsmischung zugegeben werden.

Gleiches gilt für die erfindungsgemäß einzusetzende Protonensäure. Sie kann gemeinsam mit dem Katalysator, z.B. vorgelöst in einer der o.g. Komponenten, wahlweise aber auch separat, vorgelöst in der nicht den Katalysator enthaltenden Komponente, zum Einsatz gelangen. Bei letzterer Vorgehensweise resultiert als weiterer Vorteil, dass man an sich, d.h. in Abwesenheit von Protonensäuren, vergleichsweise inaktive Katalysatoren (was nachteilig ist), die in der Regel aber auch bzgl. der unerwünschten Umsetzung der Isocyanatgruppen untereinander weniger aktiv sind (was von Vorteil ist), in der Isocyanatkomponente gelöst einsetzen kann und dabei trotzdem vergleichsweise lagerstabile Zubereitungen erhält, die erst nach Vermischung mit dem Reaktionspartner, in der Regel einem OH-funktionellen Polyol auf Polyether-, Polyester-, Polyacrylat- und/oder Polycarbonatbasis, welcher die Protonensäure enthält, bei der Aushärtungsreaktion die erfindungsgemäßen Vorteile entfalten.

Die für die Herstellung von Polyisocyanat-Polyadditionsprodukten, insbesondere Polyurethanen geeigneten Polyisocyanate (a) sind die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H₁₂MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H₆XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktuereinheiten. Bevorzugt werden Polyisocyanate auf Basis aliphatischer und cycloaliphatischer Diisocyanate eingesetzt.

Die Polyisocyanatkomponente (a) kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyharnstoff einbaufähige Farbstoffe (die also über Zerewitinoff-aktive Wasserstoffatome verfügen) und/oder Farbpigmente enthalten.

Als NCO-reaktive Verbindungen (b) können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole. Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden. Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylnitril und/oder Methacrylnitril erhalten. Geeignete Hydroxylgruppen aufweisende, olefinisch ungesättigte Monomere sind insbesondere 2-Hydroxyethylacrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Bevorzugt handelt es sich bei b) um höhermolekulare Polyhydroxyverbindungen.

Die Komponente (b) kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Das Verfahren zur Herstellung der Polyisocyanat-Polyadditionsprodukte kann in Gegenwart üblicher Rheologieverbesserer, Stabilisatoren, UV-Schutzmittel, Katalyatoren, Hydrolyseschutzmittel, Emulgatoren, Füllstoffe, gegebenenfalls einbaufähiger Farbstoffe (die also über Zerewitinoff-aktive Wasserstoffatome verfügen) und/oder Farbpigmente durchgeführt werden. Möglich ist auch eine Zugabe von Zeolithen.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat-Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Die erfindungsgemäß einzusetzenden Protonensäuren können beliebig aus einer Fülle an dem Fachmann als hierfür geeignet erscheinenden Stoffen ausgewählt werden. Wichtig ist lediglich, dass sie mit der Polyurethanmatrix keine negativen Wechselwirkungen eingehen bzw. zu Unverträglichkeiten führen, was durch geeignete Wahl der Molekülstruktur des Restes X- in der Protonensäure HX auf nahezu beliebige Weise realisiert werden kann. Auch kann die Protonsäure über den Rest X in der Polymermatrix des, in der Regel OH-Gruppen tragenden, Reaktionspartners b) für die Isocyanatkomponente a) gebunden vorliegen. So enthalten viele Polyacrylate des Standes der Technik acide Protonen aus dem Einbau von (Meth)acrylsäureeinheiten bei deren Herstellung. Mitunter ist die daraus resultierende Säurezahl sogar so hoch, dass die Thermolatenz des erfindungsgemäßen Katalysatorsystems leidet, was man durch einfache Vorversuche unter gezielter Variation der Säurezahl, Abpuffern mit geeigneten Basen etc. leicht auf das jeweils gewünschte Maß einstellen kann.

Schließlich kann die erfindungsgemäß einzusetzende Protonensäure auch erst bei der Aushärtungsreaktion aus geeigneten Precursoren wie Säureanhydriden, -halogeniden etc. z.B. durch die Einwirkung von (Luft)feuchtigkeit, generiert werden.

Die offenbarten Systeme können in Lösung oder aus der Schmelze sowie bei Pulverlacken in fester Form mit Methoden wie Streichen, Rollen, Gießen, Spritzen, Tauchen, Wirbelschichtverfahren oder durch elektrostatische Sprühverfahren auf dem zu beschichtenden Gegenstand appliziert werden. Als Substrate eigenen sich beispielsweise Werkstoffe wie Metalle, Holz, Kunststoffe oder Keramiken.

Ein weiterer Gegenstand der Offenbarung sind daher Beschichtungsmittel enthaltend die offenbarten Polyisocyanat-Polyadditionsprodukte, ebenso wie die daraus erhältlichen Beschichtungen und die mit diesen Beschichtungen beschichteten Substrate.

### Beispiele

Die Erfindung soll anhand der nachfolgenden Beispiele näher erläutert werden. In den Beispielen sind alle Prozentangaben, soweit nicht anders vermerkt, als Gewichtsprozent zu verstehen. Alle Reaktionen wurden unter einer trockenen Stickstoffatmosphäre durchgeführt. Die Katalysatoren aus Tabelle 1 wurden nach Standard-Literaturvorschriften erhalten (vgl. Chem. Heterocycl. Comp. 2007 43 813-834 und darin zitierte Literatur), DBTL wurde von der Fa. Kever Technologie, Ratingen, D, bezogen.

Die Katalysatormenge wurde zur besseren Vergleichbarkeit der Aktivität der bei erfindungsgemäßer Herangehensweise durchgeführten Versuche mit den Vergleichsbeispielen als mg Sn je kg (Lösemittel-freiem) Polyisocyanathärter (ppm) angegeben, wobei als Polyisocyanathärter das Handelsprodukt Desmodur® N 3300 der Fa. Bayer MaterialScience AG, Leverkusen, DE, und als Modellverbindung für die Isocyanat-reaktive Komponente (,Poly'ol) genau ein Äquivalent (bezogen auf die freien Isocyanatgruppen des Polyisocyanathärters) Triethylenglykolmonomethylether, TEGMME (Produkt der Fa. Aldrich, Taufkirchen, D), eingesetzt wurden. Durch Zugabe von 10% (bezogen auf Desmodur® N 3300) n-Butylacetat wurde sichergestellt, über den gesamten Reaktionsverlauf hinreichend niedrigviskose Proben ziehen zu können, die eine genaue Erfassung des NCO-Gehaltes mittels Titration gemäß DIN 53 185 gestatten. Der zu Beginn der Reaktion ohne jedwede NCO-OH-Reaktion berechnete NCO-Gehalt beläuft sich dabei auf 10,9 +/-0,1 %, Versuche bei denen der NCO-Gehalt auf 0,1 % gefallen war oder bei denen nach 4 h Reaktionszeit noch mehr als 6% NCO-Gehalt vorlagen, wurden beendet.

Vergleichsversuch 1 bei konstant 30°C zeigt die äußerst langsame Abnahme des NCO-Gehaltes der Mischung im unkatalysierten Fall (Tabelle 2, Versuch 1). Vergleichsversuch 2 stellt den mit Dibutylzinndilaurat gemäß Stand der Technik durchgeführten "Standardfall" dar. Vergleichsversuche 3 bis 6 belegen die aus der WO 2011/051247 bekannte, geringe bzw. nicht vorhandene Aktivität der anorganischen Stannacyclen, hier Kat. 1 - 4, für die Beschleunigung der NCO-OH-Reaktion bei 30°C ("Zimmertemperatur"). Die erfindungsgemäßen Beispiele 5 -11 zeigen, wie allein durch Zugabe der angegebenen Säuremenge die Thermolatenz gezielt gebrochen und auch bei 30°C eine zügige NCO-OH-Reaktion herbeigeführt werden kann. Wie aus einem Vergleich der erfindungsgemäßen Beispiele 5 und 6 einerseits sowie 7-11 andererseits ersichtlich ist, kann die gleiche Säuremenge bei unterschiedlichen Katalysatoren durchaus unterschiedlich starke Effekte bzgl. der Beschleunigung der Reaktion bei 30°C bewirken. Das für den jeweiligen Einsatz gewünschte Optimum ist daher immer durch Vorversuche zu ermitteln.

**Tabelle 1 Übersicht der verwendeten Katalysatoren**

| **Katalysator** | **Strukturformel** | **Summenformel** | **Molgewicht [g/moll** | **Sn-Gehalt** |
|---|---|---|---|---|
| **DBTL (Vergleich)** | 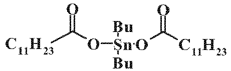 | C₃₂H₆₄O₄Sn | 631,55 | 18,79% |
| **Kat. 1** | 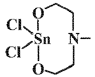 | C₅H₁₁Cl₂NO₂Sn | 306,74 | 38,7% |
| **Kat. 2** | 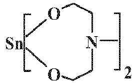 | C₁₀H₂₂N₂O₄Sn | 352,98 | 33,6% |
| **Kat. 3** | 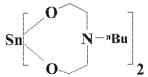 | C₁₆H₃₄N₂O₄Sn | 437,15 | 27,15% |
| **Kat. 4** | 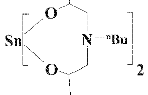 | C₂₀H₄₂N₂O₄Sn | 493,26 | 24,06% |

**Tabelle 2 Übersicht der durchgeführten Versuche**

| (Beispiel 1 - 6: Vergleichsbeispiele, **Beispiele 7 - 15: erfindungsgemäß)** | | | | | | | | |
|---|---|---|---|---|---|---|---|---|
| **Bsp. -Nr.** | **Kat.** | **Kat.-konz. ¹⁾** | **Säure [%]²⁾** | **NCO-Gehalt der Mischung [% nach [h] bei 30°C** | | | | |
| | | | | **1** | **2** | **3** | **4** | **5** |
| 1 | Ohne | 0 | 0 | 11,0 | 10,9 | 10,9 | 10,9 | 10,8³⁾ |
| 2 | DBTL | 50 | 0 | 9,9 | 8,9 | 7,9 | 7,1 | 6,2 |
| 3 | Kat. 1 | 50 | 0 | 10,7 | 10,4 | 10,1 | 9,7 | 9,5 |
| 4 | Kat. 2 | 50 | 0 | 10,9 | 10,8 | 10,7 | 10,5 | 10,3 |
| 5 | Kat. 3 | 50 | 0 | 10,7 | 10,6 | 10,5 | 10,3 | 10,2 |
| 6 | Kat. 4 | 50 | 0 | 11,1 | 11,0 | 11,0 | 11,0 | 10,9 |
| **7** | **Kat. 1** | **50** | **1** | **9,5** | **8,0** | **6,7** | **5,5** | **4,4** |
| **8** | **Kat. 1** | **50** | **2** | **7,5** | **6,2** | **5,1** | **3,9** | **2,8** |
| **9** | **Kat. 2** | **50** | **1** | **10,4** | **9,8** | **9,4** | **8,4** | **8,2** |
| **10** | **Kat. 2** | **50** | **2** | **10,0** | **9,6** | **9,2** | **8,3** | **8,2** |
| **11** | **Kat. 2** | **50** | **3** | **9,2** | **8,3** | **7,5** | **6,2** | **5,8** |
| **12** | **Kat. 2** | **50** | **4** | **8,6** | **7,7** | **7,8** | **6,0** | **5,1** |
| **13** | **Kat. 2** | **50** | **5** | **7,5** | **6,7** | **5,5** | **4,7** | **3,8** |
| **14** | **Kat. 3** | **50** | **2** | **9,7** | **8,6** | **7,6** | **6,8** | **5,5** |
| **15** | **Kat. 4** | **50** | **3** | **8,9** | **7,9** | **7,2** | **6,6** | **4,2** |

| | | | | | | | | |
|---|---|---|---|---|---|---|---|---|
| ¹⁾Sn [ppm] auf Polyisocyanathärter, Lösemittel-frei; ²⁾ [%] Essigsäure auf TEGMME, ³⁾ nach 97 h bei 30°C: 8,9% NCO | | | | | | | | |

### Beispiel 16

Durch jeweils 3-tägiges Rühren bei 50°C mit überschüssigem Katalysator 1 bzw. 2 (Feststoff) gesättigte und anschließend filtrierte Lösungen von
a) Katalysator 1 (nach Filtration 22,5 % NCO-Gehalt, Viskosität 1500 mPas bei 23°C) bzw.
b) Katalysator 2 (nach Filtration 22,7 % NCO-Gehalt, Viskosität 1250 mPas bei 23°C) in Desmodur® N 3600, Handelsprodukt der Fa. Bayer MaterialScience AG, Leverkusen, D, wurden bei 50°C im Trockenschrank aufbewahrt. Nach 6 monatiger Lagerung war die Mischung aus Beispiel 16a) vollständig geliert. Die Mischung aus Beispiel 16a) hingegen war nur leicht verändert und wies folgende Daten auf: 21,9 % NCO-Gehalt, 1860 mPas bei 23°C.

## Patentansprüche

1. Verfahren zur Herstellung von Polyisocyanat-Polyadditionsprodukten wobei
a) mindestens ein aliphatisches, cycloaliphatisches, araliphatisches und/oder aromatisches Polyisocyanat
b) mindestens eine NCO-reaktive Verbindung
c) mindestens ein, ohne Zusatz von Protonensäuren ggf. thermolatenter, anorganischer, Zinn enthaltender Katalysator
d) gegebenenfalls weitere von c) verschiedene Katalysatoren und/oder Aktivatoren
e) gegebenenfalls Füllstoffe, Pigmente, Additive, Verdicker, Entschäumer und/oder andere Hilfs- und Zusatzstoffe und
f) eine, bezogen auf den unter c) genannten Katalysator mindestens äquimolare Menge und bezogen auf die NCO-reaktiven Gruppen aus der Verbindung aus b) maximal dreifach-molaren Menge einer Protonensäure
miteinander zur Reaktion gebracht werden, wobei das Verhältnis des Gewichts des Zinns aus Komponente c) und des Gewichts der Komponente a) weniger als 1000 ppm beträgt, wenn Komponente a) ein aliphatisches Polyisocyanat ist und weniger als 80 ppm beträgt, wenn Komponente a) ein aromatisches Polyisocyanat ist,
**dadurch gekennzeichnet, dass** als Katalysatoren c) zyklische Zinnverbindungen der Formel I, II oder III eingesetzt werden: 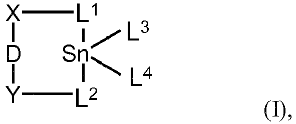 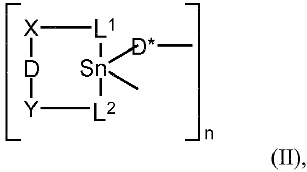 mit n > 1, 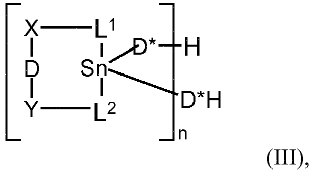 mit n > 1,
wobei gilt, dass
D für -O-, -S- oder -N(R¹)- steht,
wobei R¹ für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 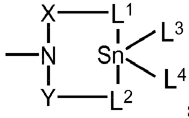 steht,
oder R¹ und L3 zusammen für -Z-L⁵- stehen, und
D* für -O- oder -S- steht, sowie
X, Y und Z für gleiche oder unterschiedliche Reste ausgewählt aus Alkylenresten der Formeln -C(R²)(R³)-, -C(R²)(R³)-C(R⁴)(R⁵)- oder -C(R²)(R³)-C(R⁴)(R⁵)-C(R⁶)(R⁷)- oder ortho-Arylenresten der Formeln 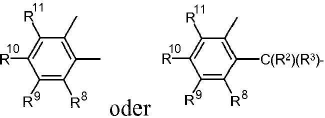 stehen,
wobei R² bis R¹¹ unabhängig voneinander für gesättigte oder ungesättigte, linare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen, und
L¹, L² und L⁵ unabhängig voneinander für -O-, -S-, -OC(=O)--OC(=S)-, -SC(=O)-, -SC(=S), -OS(=O)₂O-, -OS(=O)₂- oder -N(R12)- stehen,
wobei R¹² für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht, und
L³ und L⁴ unabhängig voneinander für -OH, -SH, -OR¹³, -Hal, -OC(=O)R¹⁴, -SR¹⁵, -OC(=S)R¹⁶, -OS(=O)₂OR¹⁷, -OS(=O)₂R¹⁸ oder -NR¹⁹R²⁰ stehen, oder L³ und L⁴ zusammen für -L¹-X-D-Y-L ²- stehen,
wobei für R¹³ bis R²⁰ unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

2. Verfahren gemäß Anspruch 1, wobei L³ und L⁴ zusammen für -L¹-X-D-Y-L² stehen.

3. Verfahren gemäß Ansprüchen 1 und 2, wobei D -N(R¹)- ist und R¹ Wasserstoff oder ein Alkyl-, Aralkyl-, Alkaryl- oder Arylrest mit bis zu 20 C-Atomen ist oder der Rest 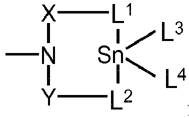 ist.

4. Verfahren gemäß Anspruch 2, wobei R¹ Wasserstoff oder ein Methyl-, Ethyl-, Propyl-, Butyl-, Hexyl-, Octyl-, Ph-, oder CH₃Ph-Rest oder der Rest 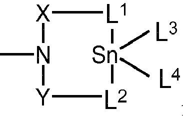 ist und wobei Propyl-, Butyl-, Hexyl-, und Octyl für alle isomeren Propyl-, Butyl-, Hexyl- sowie Octylreste stehen.

5. Verfahren gemäß einem der Ansprüche 1 bis 3, wobei D* -O- ist.

6. Verfahren gemäß einem der Ansprüche 1 bis 4, wobei X, Y und Z unabhängig voneinander Alkylenreste der Formel -C(R²)(R³)-
oder -C(R²)(R³)-C(R⁴)(R⁵)- oder ortho-Arylenreste der Formel 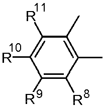 sind und R² bis R⁵ unabhängig voneinander Wasserstoff, Alkyl-, Aralkyl-, Alkaryl- oder Arylreste mit bis zu 20 C-Atomen sind und R⁸ bis R¹¹ unabhängig voneinander Wasserstoff oder Alkylreste mit bis zu 8 C-Atomen sind.

7. Verfahren gemäß Anspruch 5, wobei die Reste R² bis R⁵ unabhängig voneinander Wasserstoff oder Alkylreste mit bis zu 8 C-Atomen sind und R⁸ bis R¹¹ unabhängig voneinander Wasserstoff oder Methyl sind.

8. Verfahren gemäß einem der Ansprüche 1 bis 6, wobei L¹, L² und L⁵ unabhängig voneinander -N(R¹²)-, -S-, -SC(=S)-, -SC(=O)-, -OC(=S)-, -O- oder -OC(=O)- sind und R¹² Wasserstoff oder ein Alkyl-, Aralkyl-, Alkaryl- oder Arylrest mit bis zu 20 C-Atomen ist.

9. Verfahren gemäß Anspruch 7, wobei L¹, L² und L⁵ unabhängig voneinander -N(H)-, -N(CH₃)-, -N(C₂H₅)-, -N(C₄H₉)-, -N(C₈H₁₇)-, -N(C₆H₅)-, -S-, -SC(=S)-, - SC(=O)-, -OC(=S)-, -O- oder -OC(=O)- sind.

10. Verfahren gemäß einem der Ansprüche 1 bis 8, wobei L³ und L⁴ unabhängig voneinander -OH, -SH, -OR¹³, -Hal oder -OC(=O)R¹⁴ sind und die Reste R¹³ und R¹⁴ bis zu 20 Kohlenstoffatome aufweisen.

11. Verfahren gemäß Anspruch 9, wobei L³ und L⁴ unabhängig voneinander Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat sind, wobei Pr, Bu, Hex und Oct für alle isomeren Propyl-, Butyl-, Hexyl- sowie Octylreste stehen.

## Claims

1. Process for the preparation of polyisocyanate polyaddition products wherein
a) at least one aliphatic, cycloaliphatic, araliphatic and/or aromatic polyisocyanate,
b) at least one NCO-reactive compound,
c) at least one inorganic, tin-comprising catalyst which is thermolatent without the presence of protonic acids,
d) optionally further catalysts and/or activators other than c),
e) optionally fillers, pigments, additives, thickeners, antifoams and/or other auxiliary substances and added ingredients, and
f) a protonic acid in an amount which is at least equimolar based on the catalyst mentioned under c) and not more than three-times molar based on the NCO-reactive groups from the compound from b),
are reacted with one another, wherein the ratio of the weight of the tin from component c) and of the weight of component a) is less than 1000 ppm when component a) is an aliphatic polyisocyanate and less than 80 ppm when component a) is an aromatic polyisocyanate,
**characterized in that** there are used as catalysts (c) cyclic tin compounds of formula I, II or III: 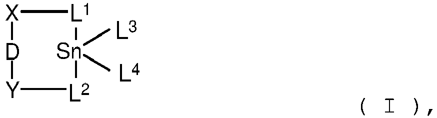 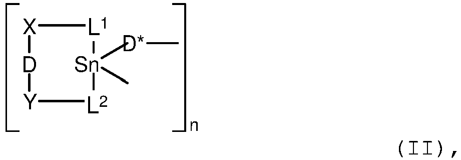 where n > 1, 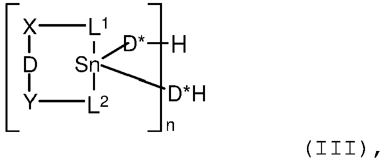 where n > 1,
wherein
D represents -O-, -S- or -N(R¹)-,
wherein R¹ represents a saturated or unsaturated, linear or branched, aliphatic or cycloaliphatic or an optionally substituted, aromatic or araliphatic radical having up to 20 carbon atoms, which can optionally comprise heteroatoms from the group oxygen, sulfur, nitrogen, or represents hydrogen or the radical 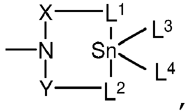 or R¹ and L3 together represent -Z-L⁵-, and
D* represents -O- or -S-, and
X, Y and Z represent the same or different radicals selected from alkylene radicals of the formula -C(R²) (R³)-, -C(R²) (R³)-C(R⁴) (R⁵) - or-C(R²) (R³)-C(R⁴) (R⁵) -C (R⁶) (R⁷) - or ortho-arylene radicals of the formula 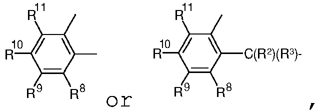 wherein R² to R¹¹ independently of one another represent saturated or unsaturated, linear or branched, aliphatic or cycloaliphatic or optionally substituted, aromatic or araliphatic radicals having up to 20 carbon atoms, which can optionally comprise heteroatoms from the group oxygen, sulfur, nitrogen, or represent hydrogen, and
L¹, L² and L⁵ independently of one another represent -O-, -S-, -OC(=O)-, -OC(=S)-, -SC(=O)-, -SC (=S) -, -OS(=O)₂O-, -OS (=O)₂- or -N(R12)-,
wherein R¹² represents a saturated or unsaturated, linear or branched, aliphatic or cycloaliphatic or an optionally substituted, aromatic or araliphatic radical having up to 20 carbon atoms, which can optionally comprise heteroatoms from the group oxygen, sulfur, nitrogen, or represents hydrogen; and
L³ and L⁴ independently of one another represent - OH, -SH, -OR¹³, -Hal, -OC(=O)R¹⁴, -SR¹⁵, -OC(=S)R¹⁶, -OS (=O) ₂OR¹⁷, -OS (=O) ₂R¹⁸ or -NR¹⁹R²⁰, or L³ and L⁴ together represent -L¹-X-D-Y-L²-,
wherein R¹³ to R²⁰ independently of one another represent saturated or unsaturated, linear or branched, aliphatic or cycloaliphatic or optionally substituted, aromatic or araliphatic radicals having up to 20 carbon atoms, which can optionally comprise heteroatoms from the group oxygen, sulfur, nitrogen, or represent hydrogen.

2. Process according to Claim 1, wherein L³ and L⁴ together represent -L¹-X-D-Y-L².

3. Process according to Claims 1 and 2, wherein D is -N (R¹) - and R¹ is hydrogen or an alkyl, aralkyl, alkaryl or aryl radical having up to 20 carbon atoms or the radical

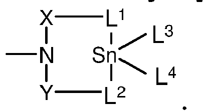

4. Process according to Claim 2, wherein R¹ is hydrogen or a methyl, ethyl, propyl, butyl, hexyl, octyl, Ph- or CH₃Ph- radical or the radical 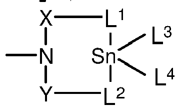 and wherein propyl, butyl, hexyl and octyl represent all isomeric propyl, butyl, hexyl and octyl radicals.

5. Process according to any one of Claims 1 to 3, wherein D* is -O-.

6. Process according to any one of Claims 1 to 4, wherein X, Y and Z independently of one another are alkylene radicals of the formula -C(R²) (R³)-or -C(R²) (R³)-C(R⁴) (R⁵)- or ortho-arylene radicals of the formula 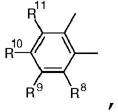 and R² to R⁵ independently of one another are hydrogen, alkyl, aralkyl, alkaryl or aryl radicals having up to 20 carbon atoms, and R⁸ to R¹¹ independently of one another are hydrogen or alkyl radicals having up to 8 carbon atoms.

7. Process according to Claim 5, wherein the radicals R² to R⁵ independently of one another are hydrogen or alkyl radicals having up to 8 carbon atoms, and R⁸ to R¹¹ independently of one another are hydrogen or methyl.

8. Process according to any one of Claims 1 to 6, wherein L¹, L² and L⁵ independently of one another are -N (R¹²) -, -S-, -SC(=S)-, -SC (=O) -, -OC(=S)-, - O- or -OC (=O) - and R¹² is hydrogen or an alkyl, aralkyl, alkaryl or aryl radical having up to 20 carbon atoms.

9. Process according to Claim 7, wherein L¹, L² and L⁵ independently of one another are -N(H)-, - N(CH₃)-, -N(C₂H₅)-, -N(C₄H₉)-, -N(C₈H₁₇) - N(C₆H₅)-, -S-, -SC (=S) -, -SC (=O) -, -OC(=S)-, -O- or -OC(=O)-.

10. Process according to any one of Claims 1 to 8, wherein L³ and L⁴ independently of one another are -OH, -SH, -OR¹³, -Hal or -OC (=O) R¹⁴ and the radicals R¹³ and R¹⁴ have up to 20 carbon atoms.

11. Process according to Claim 9, wherein L³ and L⁴ independently of one another are Cl-, MeO-, EtO-, PrO-, BuO-, HexO-, OctO-, PhO-, formate, acetate, propanoate, butanoate, pentanoate, hexanoate, octanoate, laurate, lactate or benzoate, wherein Pr, Bu, Hex and Oct represent all isomeric propyl, butyl, hexyl and octyl radicals.

## Revendications

1. Procédé de fabrication de produits de polyaddition de polyisocyanate, dans lequel
a) au moins un polyisocyanate aliphatique, cycloaliphatique, araliphatique et/ou aromatique,
b) au moins un composé réactif avec NCO,
c) au moins un catalyseur inorganique contenant de l'étain, éventuellement thermolatent sans ajout d'acides protoniques,
d) éventuellement d'autres catalyseurs et/ou activateurs différents de c),
e) éventuellement des charges, des pigments, des additifs, des épaississants, des antimousses et/ou d'autres adjuvants et additifs, et
f) une quantité au moins équimolaire, par rapport au catalyseur indiqué en c), et une quantité molaire au plus triple, par rapport aux groupes réactifs avec NCO du composé de b), d'un acide protonique,
sont mis en réaction les uns avec les autres, le rapport entre le poids de l'étain du composant c) et le poids du composant a) étant inférieur à 1 000 ppm lorsque le composant a) est un polyisocyanate aliphatique, et inférieur à 80 ppm lorsque le composant a) est un polyisocyanate aromatique,
**caractérisé en ce que** des composés d'étain cycliques de la formule I, II ou III sont utilisés en tant que catalyseurs c) : 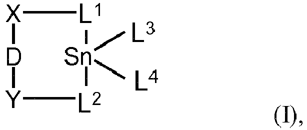 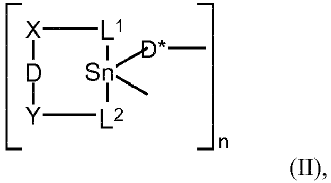 avec n > 1, 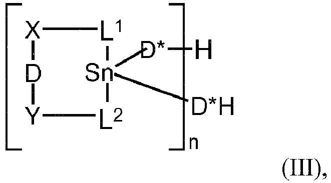 avec n > 1,
dans lesquelles
D représente -O-, -S- ou -N(R¹)-,
R¹ représentant un radical saturé ou insaturé, linéaire ou ramifié, aliphatique ou cycloaliphatique ou éventuellement substitué, aromatique ou araliphatique, contenant jusqu'à 20 atomes de carbone, qui peut éventuellement contenir des hétéroatomes de la série constituée par l'oxygène, le soufre, l'azote, ou représentant l'hydrogène ou le radical 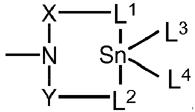 ou R¹ et L³ représentant ensemble -Z-L⁵-, et
D* représente -O- ou -S-, et
X, Y et Z représentent des radicaux identiques ou différents choisis parmi les radicaux alkylène des formules -C(R²) (R³)-, -C (R²) (R³) -C (R⁴) (R⁵) - ou -C(R²) (R³)-C(R⁴) (R⁵) -C(R⁶) (R⁷)- ou des radicaux ortho-arylène des formules 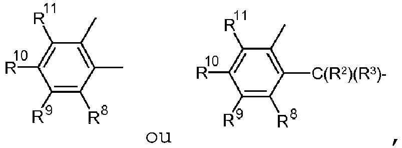 dans lesquelles R² à R¹¹ représentent indépendamment les uns des autres des radicaux saturés ou insaturés, linéaires ou ramifiés, aliphatiques ou cycloaliphatiques, ou éventuellement substitués, aromatiques ou araliphatiques, contenant jusqu'à 20 atomes de carbone, qui peuvent éventuellement contenir des hétéroatomes de la série constituée par l'oxygène, le soufre, l'azote, ou représentent l'hydrogène, et
L¹, L² et L⁵ représentent indépendamment les uns des autres -O-, -S-, -OC(=O)-, -OC(=S)-, -SC(=O)-, -SC(=S), -OS (=O)₂O-, -OS (=O)₂- ou -N(R¹²)-,
R¹² représentant un radical saturé ou insaturé, linéaire ou ramifié, aliphatique ou cycloaliphatique ou éventuellement substitué, aromatique ou araliphatique, contenant jusqu'à 20 atomes de carbone, qui peut éventuellement contenir des hétéroatomes de la série constituée par l'oxygène, le soufre, l'azote, ou représentant l'hydrogène, et
L³ et L⁴ représentent indépendamment l'un de l'autre - OH, -SH, -OR¹³, -Hal, -OC (=O) R¹⁴, -SR¹⁵, -OC (=S) R¹⁶, - OS (=O) ₂OR¹⁷, -OS (=O) ₂R¹⁸ ou -NR¹⁹R²⁰, ou L³ et L⁴ représentent ensemble -L¹-X-D-Y-L²-,
R¹³ à R²⁰ représentant indépendamment les uns des autres des radicaux saturés ou insaturés, linéaires ou ramifiés, aliphatiques ou cycloaliphatiques, ou éventuellement substitués, aromatiques ou araliphatiques, contenant jusqu'à 20 atomes de carbone, qui peuvent éventuellement contenir des hétéroatomes de la série constituée par l'oxygène, le soufre, l'azote, ou représentant l'hydrogène.

2. Procédé selon la revendication 1, dans lequel L³ et L⁴ représentent ensemble -L¹-X-D-Y-L².

3. Procédé selon les revendications 1 et 2, dans lequel D représente -N(R¹)- et R¹ représente l'hydrogène ou un radical alkyle, aralkyle, alkaryle ou aryle contenant jusqu'à 20 atomes C ou le radical

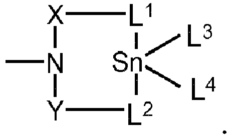

4. Procédé selon la revendication 2, dans lequel R¹ représente l'hydrogène ou un radical méthyle, éthyle, propyle, butyle, hexyle, octyle, Ph ou CH₃Ph ou le radical 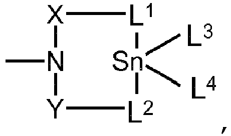 et dans lequel propyle, butyle, hexyle et octyle représentent tous les radicaux propyle, butyle, hexyle et octyle isomères.

5. Procédé selon l'une quelconque des revendications 1 à 3, dans lequel D* représente -O-.

6. Procédé selon l'une quelconque des revendications 1 à 4, dans lequel X, Y et Z représentent indépendamment les uns des autres des radicaux alkylène de la formule -C (R²) (R³) - ou -C(R²) (R³) -C (R⁴) (R⁵) - ou des radicaux ortho-arylène de la formule 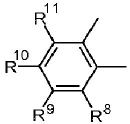 et R² à R⁵ représentent indépendamment les uns des autres l'hydrogène, des radicaux alkyle, aralkyle, alkaryle ou aryle contenant jusqu'à 20 atomes C, et R⁸ à R¹¹ représentent indépendamment les uns des autres l'hydrogène ou des radicaux alkyle contenant jusqu'à 8 atomes C.

7. Procédé selon la revendication 5, dans lequel les radicaux R² à R⁵ représentent indépendamment les uns des autres l'hydrogène ou des radicaux alkyle contenant jusqu'à 8 atomes C et R⁸ à R¹¹ représentent indépendamment les uns des autres l'hydrogène ou méthyle.

8. Procédé selon l'une quelconque des revendications 1 à 6, dans lequel L¹, L² et L⁵ représentent indépendamment les uns des autres -N(R¹²)-, -S-, - SC(=S)-, -SC (=O) -, -OC(=S)-, -O- ou -OC(=O)-, et R¹² représente l'hydrogène ou un radical alkyle, aralkyle, alkaryle ou aryle contenant jusqu'à 20 atomes C.

9. Procédé selon la revendication 7, dans lequel L¹, L² et L⁵ représentent indépendamment les uns des autres -N(H)-, -N (CH₃) -, -N (C₂H₅) -, -N(C₄H₉)-, -N(C₈H₁₇)-, - N(C₆H₅)-, -S-, -SC(=S)-, -SC (=O) -, -OC(=S)-, -O- ou - OC(=O)-.

10. Procédé selon l'une quelconque des revendications 1 à 8, dans lequel L³ et L⁴ représentent indépendamment l'un de l'autre -OH, -SH, -OR¹³, -Hal ou -OC(=O)R¹⁴, et les radicaux R¹³ et R¹⁴ comprennent jusqu'à 20 atomes de carbone.

11. Procédé selon la revendication 9, dans lequel L³ et L⁴ représentent indépendamment l'un de l'autre Cl-, MeO-, EtO-, PrO-, BuO-, HexO-, OctO-, PhO-, formiate, acétate, propanoate, butanoate, pentanoate, hexanoate, octanoate, laurate, lactate ou benzoate ; Pr, Bu, Hex et Oct représentant tous les radicaux propyle, butyle, hexyle et octyle isomères.
